# EUROPÄISCHE PATENTANMELDUNG

(11) **EP 1 737 237 A1**
(43) Veröffentlichungstag der Anmeldung: **27.12.2006**
(21) Anmeldenummer: 05013488.1
(22) Anmeldetag: 22.06.2005
(51) Int. Cl.: H04N 7/173, H04N 7/16

(54) **Verfahren und Anordnung zum Wiedergeben von Medieninhalten**

(71) Anmelder: SIEMENS AKTIENGESELLSCHAFT, 80333 München (DE)
(72) Erfinder: Hielscher, Christoph, 80801 München (DE); Jenzowsky, Stefan, 81243 München (DE); Scheuer, Axel, 80804 München (DE); Schweickhardt, Harald, 81479 München (DE); Stelzl, Rudolf, 85221 Dachau (DE)

(57) **Zusammenfassung**

Die vorliegende Erfindung betrifft ein verbessertes Verfahren und eine verbesserte Anordnung für Video on Demand. Gemäß der Erfindung wird vorgesehen, daß ein VoD Nutzer Medieninhalte aus der von einem VoD Anbieter angebotenen Vielfalt ("Bibliothek") von Medieninhalten auswählen und in einen ihm bzw. seinem Endgerät (104) zugeordneten virtuellen Entleihbestand aufnehmen kann. In diesem virtuellen Entleihbestand enthaltene Inhalte kann der Nutzer beliebig oft ansehen; Gebührentickets für die nachgelagerte Vergebührung der Nutzung werden periodisch, beispielsweise für jeden Tag oder aller 24 Stunden, erstellt, solange sich der zu vergebührende Medieninhalt im virtuellen Entleihbestand des Nutzers befindet. Durch "virtuelle" Rückgabe des entliehenen Medieninhalts kann der Nutzer die Leihe beenden; der Medieninhalt wird aus seinem virtuellen Entleihbestand entfernt und steht dem Nutzer dann nicht mehr zur Verfügung. Der virtuelle Entleihbestand wird gebildet durch Verweise auf die jeweils ausgeliehenen Medieninhalte.

## Beschreibung

Die vorliegende Erfindung betrifft ein Verfahren und eine Anordnung zum Wiedergeben von Medieninhalten. Insbesondere liefert die vorliegende Erfindung ein verbessertes Verfahren und eine verbesserte Anordnung für Video on Demand.

Nachdem über Jahrzehnte hinweg das klassische, zunächst per Antenne ausgestrahlte und vom Nutzer nicht beeinflußbare Fernsehen das Konsumverhalten der Nutzer geprägt hat, konnten mit dem Verfügbarwerden von Breitbandverbindungen Dienste entstehen, die dem Nutzer eine wesentlich größere Flexibilität beim Konsum von Videoinhalten ermöglichen.

Ein solcher Dienst ist bekannt als Video on Demand, beispielsweise beschrieben in US-Patentschrift 5,442,390. In verschiedenen Ausprägungen von Video on Demand wird dem Nutzer, häufig gegen gesondertes Entgelt, entweder das einmalige Ansehen eines Videoinhalts, beispielsweise eines bestimmten Films, oder das mehrmalige Ansehen eines Videoinhalts innerhalb eines bestimmten Zeitraums ermöglicht. Dabei existieren Lösungen, bei denen zentrale Server die Inhalte in Echtzeit oder Nahe-Echtzeit an ein Endgerät des Nutzer übermitteln, und Lösungen, bei denen die Videoinhalte zunächst im Endgerät des Nutzers, meist durch ein Digital Rights Management geschützt, gespeichert und dann wiedergegeben werden.

Anders als bei der Ausleihe von auf Datenträgern gespeicherten Videoinhalten kann der Nutzer bei Video on Demand jedoch nicht die Ausleihe der Videoinhalte verlängern, indem er sie einfach länger behält: nach der vereinbarten Nutzung (z.B. einmaliges Ansehen oder beliebige Nutzung für 24 Stunden) verliert der Nutzer Zugriff auf die Videoinhalte und muß sie erneut bestellen. Dabei verliert er jedoch auch alle Bookmarks und anderen Markierungen (etwa Pause/Resume-Markierungen), die er während der ersten Nutzung angelegt hatte.

Aus Sicht des Anbieters von Video on Demand (VoD) ist es wünschenswert, ein Angebot zu schaffen, das auch für VoD Inhalte einen Entleih- und Rückgabevorgang vorsieht, um von den für zusätzlich vom Nutzer in Anspruch genommene Ausleihtage erhobenen Gebühren profitieren zu können.

Eine Aufgabe der vorliegenden Erfindung ist es daher, ein verbessertes Verfahren und eine verbesserte Anordnung für Video on Demand zu schaffen, welche dem Nutzer die Nutzung von Video on Demand Inhalten erleichtern.

Diese Aufgabe wird durch eine Anordnung gemäß Anspruch 1 und ein Verfahren gemäß Anspruch 6 gelöst. Bevorzugte Ausführungsformen sind in den abhängigen Ansprüchen angegeben.

Gemäß der Erfindung wird vorgesehen, daß ein VoD Nutzer Medieninhalte aus der von einem VoD Anbieter angebotenen Vielfalt ("Bibliothek") von Medieninhalten auswählen und in einen ihm bzw. seinem Endgerät zugeordneten virtuellen Entleihbestand aufnehmen kann. In diesem virtuellen Entleihbestand enthaltene Inhalte kann der Nutzer beliebig oft ansehen; Gebührentickets für die nachgelagerte Vergebührung der Nutzung werden periodisch, beispielsweise für jeden Tag oder aller 24 Stunden, erstellt, solange sich der zu vergebührende Medieninhalt im virtuellen Entleihbestand des Nutzers befindet. Durch "virtuelle" Rückgabe des entliehenen Medieninhalts kann der Nutzer die Leihe beenden; der Medieninhalt wird aus seinem virtuellen Entleihbestand entfernt und steht dem Nutzer dann nicht mehr zur Verfügung. Der virtuelle Entleihbestand wird gebildet durch Verweise auf die jeweils ausgeliehenen Medieninhalte.

Ein Vorteil der Erfindung ist darin zu sehen, daß es dem Nutzer durch die Erfindung möglich wird, einen VoD Film mit mehr Ruhe zu genießen als dies bei herkömmlichen VoD Lösungen möglich ist, bei denen der Nutzer nach 24 Stunden oder gar für jedes Anschauen den Film erneut buchen muß. Durch die Erfindung kann ein Nutzer einen Teil des Films an einem bestimmten Tag und den Rest des Films zwei oder drei Tage später anschauen, ohne beispielsweise in der Zwischenzeit die Pause-Markierung oder Bookmarks zu verlieren und ohne die - bisweilen aufwendige - Ausleih- bzw. Bestellprozedur erneut durchführen zu müssen

Ein weiterer Vorteil der Erfindung ist darin zu sehen, daß es einem VoD Anbieter möglich wird, höhere Umsätze dadurch zu erzielen, daß der Nutzer die durch die Erfindung gewonnene Bequemlichkeit nutzt und Filme länger als notwendig in seinem virtuellen Entleihbestand behält, etwa um sich besondere Szenen (z.B. durch Bookmarks gekennzeichnet) mehrere Male anschauen zu können. Der Anbieter kann die Erfindung auch nutzen, um nach Ablauf einer von ihm definierten Standardleihdauer (z.B. 2 Tage) höhere Gebühren für verspätete Rückgabe zu erheben oder aber niedrigere Gebühren zu erheben, je nachdem, ob der Anbieter auf zeitgerechte virtuelle Rückgabe des Films Wert legt (etwa weil der Anbieter nur über eine begrenzte Anzahl von VoD Lizenzen für einen bestimmten Medieninhalt verfügt) oder nicht. Dies kann über den Wert der erzeugten Gebührentickets gesteuert werden, der entsprechend mit der Ausleihdauer zu- oder abnimmt. Zusätzlich kann der Anbieter vorsehen, daß ein Inhalt, der für eine längere Zeit (z.B. 20 Tage) im virtuellen Entleihbestand eines Nutzers enthalten war und entsprechend vergebührt wurde, als von diesem Nutzer gekauft angesehen wird. Dem Nutzer kann dann beispielsweise ein Datenträger mit einer Aufzeichnung des Inhalts zugesandt oder die Möglichkeit des Erstellens einer Aufzeichnung des Inhalts eingeräumt werden.

Im folgenden werden bevorzugte Ausführungsbeispiele der vorliegenden Erfindung im Zusammenhang mit einer Zeichnung näher erläutert.

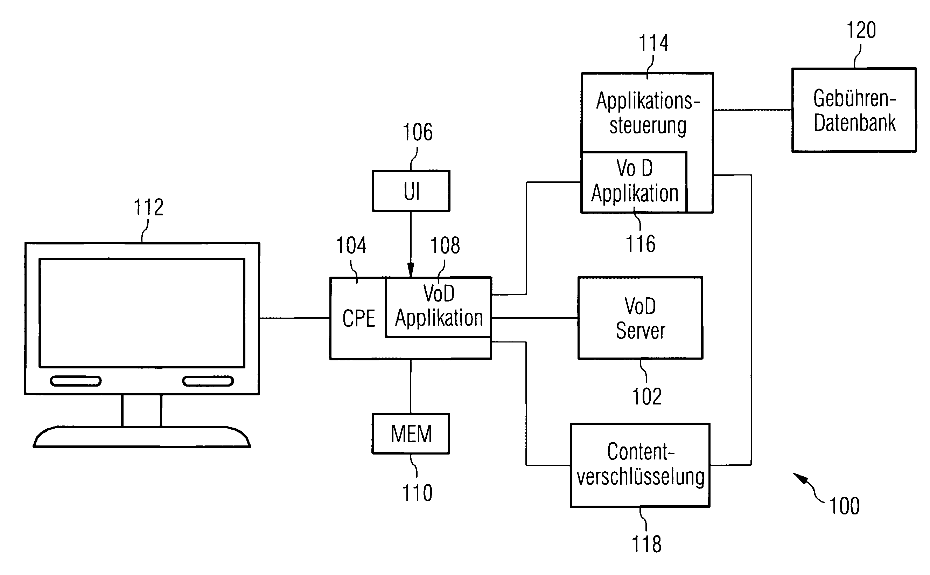

Die einzige Figur zeigt eine Anordnung 100 mit einem beispielhaften VoD System umfassend einen VoD Server 102, einer Steuerung bzw. Application Control 114 und einer optionalen Verschlüsselungssteuerung bzw. Content Encryption 118. Der VoD Server 102 dient zum Speichern von VoD Inhalten, beispielsweise Filmen. In einem alternativen Ausführungsbeispiel können auf dem VoD Server auch andere Medieninhalte wie beispielsweise Musikalben gespeichert sein, für welche die im folgenden hauptsächlich mit Bezug auf Videoinhalte beschriebenen Mechanismen in analoger Weise anwendbar sind.

Die Steuerung 114 dient der Steuerung des Inhalteabrufs durch Endgeräte 104. Die Steuerung kann mit einer Gebührendatenbank 120 verbunden sein, in welcher von der Steuerung 114 erzeugte Gebührentickets und andere gebührenrelevante Steuerinformationen empfangen und mit Nutzerkonten zur unmittelbaren oder nachgelagerten Abrechnung verknüpft werden. Die Steuerung steuert die Verschlüsselungssteuerung 118, sofern vorhanden, und optional auch den VoD Server 102 (nicht dargestellt).

Die Steuerung 114, der VoD Server 102, die Verschlüsselungssteuerung 118 und die Gebührendatenbank 120 sind zentral angeordnet und befinden sich im Kontrollbereich eines VoD Anbieters und können eine Vielzahl von Endgeräten 104 versorgen.

Beispielhaft dargestellt ist ein Endgerät 104, welches von Steuerung 114, VoD Server 102, Verschlüsselungssteuerung 118 und Gebührendatenbank 120 versorgt wird. Das Endgerät 104 kann mit lokalem Speicher 110 ausgestattet oder gekoppelt sein, der beispielsweise als herkömmliche Festplatte und/oder als Flash-Speicher und/oder als RAM ausgebildet sein kann. Natürlich sind auch Sonderformen wie im Flash-Speicherkartenformat vorliegende Kleinstfestplatten denkbar. Flash-Speicher hat dabei den Vorteil, daß eine Speicherung der Daten unabhängig vom Anliegen einer Versorgungsspannung möglich ist und gleichzeitig besonders leise Endgeräte 104 ermöglicht werden, da Flash-Speicher keine rotierenden oder andere mechanische Teile aufweist. Der Speicher 110 kann dabei fest mit dem Endgerät 104 gekoppelt oder auswechselbar gestaltet sein.

Bei dem Endgerät bzw. CPE 104 kann es sich um eine Set-Top-Box handeln, die an ein Bildwiedergabegerät 112 angeschlossen wird. Alternativ kann das Endgerät 104 in das Bildwiedergabegerät 112 integriert sein. Das Bildwiedergabegerät 112 kann ein herkömmlicher Fernseher sein. Alternativ kann es sich um einen Monitor handeln, der selbst keinen TV-Tuner aufweist. Das Endgerät 104 weist eine Benutzerschnittstelle bzw. ein User Interface 106 auf, die dem Nutzer beispielsweise dazu dient, Geräteeinstellungen vorzunehmen und seinen virtuellen Entleihbestand einzusehen und zu verwalten. Diese Benutzerschnittstelle kann, wie auf dem Gebiet der Set-Top-Boxen üblich, so realisiert sein, daß der Nutzer Eingaben über eine Fernbedienung macht und Ausgaben über das Bildwiedergabegerät 112 angezeigt bekommt.

Hat sich der Nutzer entschieden, das VoD Angebot des VoD Anbieters in Anspruch zu nehmen, kann er mittels der Benutzerschnittstelle aus dem VoD Angebot einen Medieninhalt, z.B. einen Film, auswählen. Während des Auswahlvorgangs wird dem Nutzer der pro Entleihtag zu zahlende Preis angezeigt sowie die Information, daß dieser Preis zu bezahlen ist, solange sich der Film im Entleihbestand des Nutzers befindet. Dies wird vom Nutzer bestätigt, und ein endgeräteseitiger Teil 108 einer verteilten VoD Anwendung 108, 116 signalisiert an einen anbieterseitigen Teil 116 der verteilten VoD Anwendung die Ausleihe des angeforderten Medieninhalts. Die Steuerung 114 überprüft die Berechtigung des Nutzers, diesen Medieninhalt abrufen zu dürfen, sofern nicht schon während des Auswahlvorgangs geschehen, und sendet bei positivem Ergebnis eine Adresse an den endgeräteseitigen Teil 108 der verteilten VoD Anwendung. Diese Adresse identifiziert den Medieninhalt auf dem VoD Server 102, und der Abruf des Medieninhalts durch das Nutzerendgerät 104 kann beginnen.

In einem Ausführungsbeispiel ist der Medieninhalt verschlüsselt auf dem VoD Server abgelegt. Der endgeräteseitige Teil 108 der verteilten VoD Anwendung fordert bei der Verschlüsselungssteuerung 118 einen Schlüssel zum Entschlüsseln des vom VoD Server 102 empfangenen Datenstroms an. Die Verschlüsselungssteuerung 118 fragt bei der Steuerung 114 an, ob eine entsprechende Berechtigung des Endgeräts 104 vorliegt, und falls dies der Fall ist, stellt einen geeigneten Schlüssel für das Endgerät 104 zur Verfügung.

Solange der Medieninhalt im virtuellen Entleihbestand des Nutzers enthalten ist, kann vorgesehen werden, daß der Nutzer den Medieninhalt in beliebiger Weise wiedergibt. Insbesondere kann vorgesehen werden, daß der Nutzer den Inhalt beliebig oft und mit beliebigen Unterbrechungen wiedergibt, Bookmarks setzt usw. Während sich ein Medieninhalt im virtuellen Entleihbestand des Nutzers befindet, werden periodisch Gebührentickets erstellt und an die Gebührendatenbank 120 gesendet. Beispielsweise kann ein Timer vorgesehen werden, der aller n Stunden (z.B. aller n = 24 Stunden) abläuft, bei dessen Ablauf ein Gebührenticket erzeugt und der Timer neu initialisiert wird. Alternativ wird periodisch ein Prozeß gestartet, der alle virtuellen Entleihbestände überprüft und für die darin enthaltenen Verweise auf Inhalte entsprechende Gebührentickets erzeugt, etwa indem das Alter eines Ausleihzeitstempels des Verweises ausgewertet wird. Es kann vorgesehen werden, daß dem Nutzer beim Einschalten seines Endgeräts ein Hinweis angezeigt wird, wenn sich ein Medieninhalt bereits mehr als z Tage (z.B. z = 4 Tage) in seinem virtuellen Entleihbestand befindet.

Um die Ausleihe zu beenden, wählt der Nutzer an seinem Endgerät 104 mittels der Benutzerschnittstelle 106 einen Medieninhalt aus dem aktuellen Entleihbestand aus und wählt eine entsprechende, von der Benutzerschnittstelle angebotene Rückgabe-Option aus. Die verteilte VoD Anwendung 108, 116 signalisiert den Rückgabevorgang, und der/die dem Nutzer für die Entschlüsselung des entsprechenden Medieninhalts zur Verfügung gestellten Schlüssel wird/werden ungültig. Ein abschließendes Gebührenticket kann erzeugt werden, das den gesamten Ausleihzeitraum angibt, etwa um dem VoD Anbieter einen lückenlosen Nachweis über die Benutzung des Medieninhalts zu ermöglichen.

Um die Handhabung der Erfindung zu vereinfachen, können in Ausgestaltungen der Erfindung verschiedene automatische Funktionen vorgesehen werden.

Beispielsweise kann vorgesehen werden, daß eine Ausleihe zunächst nur für einen Grundzeitraum (z.B. 24 oder 48 Stunden) gilt und der Inhalt nur dann in den Entleihbestand aufgenommen und weiter vergebührt wird, wenn der Nutzer nach Ablauf des Grundzeitraums die aktive Nutzung des Inhalts noch nicht beendet hat. Aktive Nutzung kann dabei umfassen: das Ansehen des Films; das Beibehalten von Pause-Markierung nach Pausieren der Wiedergabe des Films; das Beibehalten von gesetzten Bookmarks usw.

Ferner kann vorgesehen werden, daß ein Film automatisch als zurückgegeben gilt, wenn die letzte aktive Nutzung länger als m Stunden (z.B. m = 24 Stunden) zurückliegt, d.h. das letzte Ansehen des Films erfolgte vor m Stunden, und alle Markierungen (Pause, Bookmarks) wurden entfernt.

Zusätzlich oder alternativ kann der Anbieter vorsehen, daß ein Inhalt, der für eine längere Zeit (z.B. 20 Tage) im virtuellen Entleihbestand eines Nutzers enthalten war und entsprechend vergebührt wurde, als von diesem Nutzer gekauft angesehen wird. Dem Nutzer kann dann beispielsweise ein Datenträger mit einer Aufzeichnung des Inhalts zugesandt oder die Möglichkeit des Erstellens einer Aufzeichnung des Inhalts eingeräumt werden. Hierzu kann dem Nutzer in der Ansicht seines virtuellen Entleihbestands angezeigt werden, wieviele Entleihtage verbleiben bis die Leihe als Kauf gilt.

## Patentansprüche

1. Anordnung (100) zum Wiedergeben von Medieninhalten, welche folgendes aufweist:
- einen VoD Server (102) mit Mitteln zum Speichern einer Vielzahl digital kodierter Medieninhalte sowie Mitteln zum Versorgen einer Vielzahl von Endgeräten (104);
- zumindest ein Endgerät (104) mit Mitteln zum Auswählen und Wiedergeben von Medieninhalten und Mitteln zum Übertragen der Auswahl an eine Steuerung (114);
- eine Steuerung (114) mit Mitteln zum Empfang der Auswahl von Endgeräten (104) und Mitteln zum Freigeben von Medieninhalten zur Anzeige mittels eines auswählenden Endgeräts (104);
- eine Gebührendatenbank (120) zum Empfang von Gebührentickets;
**dadurch gekennzeichnet, daß**
- eine auf Steuerung (114) und Endgerät (104) verteilte VoD Anwendung (108, 116) zum Verwalten eines auf das Endgerät (104) bezogenen virtuellen Entleihbestands vorgesehen ist, wobei die VoD Anwendung (108, 116) folgendes aufweist:
- Mittel zum Aufnehmen eines Verweises auf Medieninhalte aus der Vielzahl von Medieninhalten in den virtuellen Entleihbestand ansprechend auf eine Auswahl am Endgerät (104), wobei Medieninhalte mit Verweis im virtuellen Entleihbestand zur Anzeige am Endgerät (104) freigegeben sind;
- Mittel zum periodischen Erzeugen eines Gebührentickets während ein Verweis auf einen Medieninhalt im virtuellen Entleihbestand enthalten ist; und
- Mittel zum Entfernen von Verweisen auf Medieninhalte aus dem virtuellen Entleihbestand ansprechend auf eine Auswahl am Endgerät (104).

2. Anordnung nach Anspruch 1, **dadurch gekennzeichnet, daß** die verteilte VoD Anwendung (108, 116) ferner Mittel zum Anzeigen des durch die Menge der für ein ausgewähltes Endgerät (104) gespeicherten Verweise auf Medieninhalte gebildeten virtuellen Entleihbestands aufweist.

3. Anordnung nach einem der Ansprüche 1 oder 2, **dadurch gekennzeichnet, daß** die verteilte VoD Anwendung (108, 116) ferner Mittel zum Auswerten von am Endgerät (104) empfangenen Nutzerkommandos aufweist und ansprechend auf das Setzen von Bookmarks während der Wiedergabe eines Medieninhalts oder das Unterbrechen der Wiedergabe eines Medieninhalts einen Verweis auf den Medieninhalt im virtuellen Entleihbestand erzeugt.

4. Anordnung nach Anspruch 3, **dadurch gekennzeichnet, daß** die verteilte VoD Anwendung (108, 116) ansprechend auf das Löschen aller einen bestimmten Medieninhalt betreffenden Bookmarks und Unterbrechungsmarkierungen den Verweis auf diesen Medieninhalt aus dem virtuellen Entleihbestand entfernt.

5. Anordnung nach einem der Ansprüche 1 bis 4, **dadurch gekennzeichnet, daß** die Mittel zum periodischen Erzeugen eines Gebührentickets so gestaltet sind daß, während ein Verweis auf einen bestimmten Medieninhalt in dem einem Endgerät (104) zugeordneten virtuellen Entleihbestand enthalten ist, aller 24 Stunden ein Gebührenticket erzeugt wird.

6. Verfahren zum Freigeben von Medieninhalten zur Wiedergabe an einem Endgerät (104) mit folgenden Verfahrensschritten:
- Bilden eines auf ein Endgerät (104) bezogenen virtuellen Entleihbestands an Medieninhalten durch Aufnehmen von Verweisen auf Medieninhalte aus einer Vielzahl von auf einem VoD Server (102) gespeicherten Medieninhalten in den virtuellen Entleihbestand ansprechend auf eine Auswahl am Endgerät (104);
- Freigeben von Medieninhalten mit Verweis im virtuellen Entleihbestand zur Anzeige am Endgerät (104) durch eine Steuerung (114);
- Verwalten des virtuellen Entleihbestands durch eine auf Steuerung (114) und Endgerät (104) verteilte VoD Anwendung (108, 116), welche:
- ein Gebührenticket periodisch erzeugt, während ein Verweis auf einen Medieninhalt im virtuellen Entleihbestand enthalten ist; und
- Verweise auf Medieninhalte aus dem virtuellen Entleihbestand ansprechend auf eine Auswahl am Endgerät (104) entfernt.

7. Verfahren nach Anspruch 6, das ferner einen Schritt zum Anzeigen des durch die Menge der für ein ausgewähltes Endgerät (104) gespeicherten Verweise auf Medieninhalte gebildeten virtuellen Entleihbestands aufweist.

8. Verfahren nach einem der Ansprüche 6 oder 7, **gekennzeichnet durch** das Auswerten von am Endgerät (104) empfangenen Nutzerkommandos und das Erzeugen eines Verweises auf einen Medieninhalt im virtuellen Entleihbestand ansprechend auf das Setzen von Bookmarks während der Wiedergabe dieses Medieninhalts oder das Unterbrechen der Wiedergabe dieses Medieninhalts.

9. Verfahren nach Anspruch 8, **gekennzeichnet durch** das Entfernen des Verweises auf einen Medieninhalt aus dem virtuellen Entleihbestand ansprechend auf das Löschen aller diesen Medieninhalt betreffenden Bookmarks und Unterbrechungsmarkierungen.

10. Verfahren nach einem der Ansprüche 1 bis 4, **dadurch gekennzeichnet daß**, während ein Verweis auf einen bestimmten Medieninhalt in dem einem Endgerät (104) zugeordneten virtuellen Entleihbestand enthalten ist, aller 24 Stunden ein Gebührenticket erzeugt wird.
